# EUROPÄISCHE PATENTANMELDUNG

(11) **EP 2 244 028 A2**
(43) Veröffentlichungstag der Anmeldung: **27.10.2010**
(21) Anmeldenummer: 10001397.8
(22) Anmeldetag: 11.02.2010
(51) Int. Cl.: F24F 6/14

(54) **Luftbefeuchtungsvorrichtung**

(30) Priorität: 16.04.2009 DE 102009017631
(71) Anmelder: Klingenburg GmbH, 45968 Gladbeck (DE)
(72) Erfinder: Klingenburg, Hans, 45239 Essen (DE)
(74) Vertreter: Lelgemann, Karl-Heinz

(57) **Zusammenfassung**

Eine Luftbefeuchtungsvorrichtung (1) hat eine Luftverwirbelungsstufe (2) mit Turbulenzflügeln bzw. Winglets (6), mittels denen eine in die Luftbefeuchtungsvorrichtung (1) eingetretene Luftströmung (5) verwirbelbar ist, eine Düsenstufe (3), mittels der die Luftströmung (5) mit einer Flüssigkeit beaufschlagbar ist, und eine Mischstrecke (4), in die die Luftströmung (5) stromab der Luftverwirbelungsstufe (2) und der Düsenstufe (3) eintritt.

Um die Feuchtigkeitsaufnahme des die Luftbefeuchtungsvorrichtung (1) durchströmenden Luftstroms (5) mit einem höheren Wirkungsgrad zu gestalten, wird vorgeschlagen, dass jeder Turbulenzflügel bzw. jedes Winglet zumindest zwei Turbulenzkanten aufweist, mittels denen in der die Luftverwirbelungsstufe (2) durchströmenden Luftströmung (5) gleichartige Luftwirbel erzeugbar sind, die zur Hauptströmungsrichtung X der Luftströmung (5) und zu einer dazu senkrechten Strömungsquerschnittrichtung Y, Z geneigt angeordnet sind und deren Abstand zueinander in der Hauptströmungsrichtung X größer wird, so dass die von den beiden Turbulenzkanten ausgebildeten Luftwirbel in ihrer Berührungszone gleich gerichtet sind.

## Beschreibung

Die Erfindung bezieht sich auf eine Luftbefeuchtungsvorrichtung mit einer Luftverwirbelungsstufe mit Turbulenzflügeln bzw. Winglets, mittels denen eine in die Luftbefeuchtungsvorrichtung eingetretene Luftströmung verwirbelbar ist, einer Düsenstufe, mittels der die Luftströmung mit einer Flüssigkeit beaufschlagbar ist, und einer Mischstrecke, in die die Luftströmung stromab der Luftverwirbelungsstufe und der Düsenstufe eintritt.

Aus der EP 1 397 617 B1 ist eine derartige Luftbefeuchtungsvorrichtung bekannt, bei der die in diese eingetretene Luftströmung zunächst mittels in der Luftverwirbelungsstufe über- und nebeneinander angeordneter Turbulenzflügel bzw. Winglets verwirbelt wird. Stromab der Luftverwirbelungsstufe ist eine Düsenstufe angeordnet, in der die verwirbelte Luftströmung mit Flüssigkeit, insbesondere mit Wasser, beaufschlagt wird. Hierzu wird das Wasser mittels der Düsen in die verwirbelte Luftströmung eingedüst bzw. abgestrahlt.

Ausgehend von dem vorstehend geschilderten Stand der Technik liegt der Erfindung die Aufgabe zugrunde, eine Luftbefeuchtungsvorrichtung der vorstehend geschilderten Gattung derart weiterzubilden, dass die Beaufschlagung der Luftströmung mit Flüssigkeit bzw. Wasser mit einem erheblich erhöhten Wirkungsgrad realisierbar ist. Derjenige Anteil des in die Luftströmung eingedüsten Wassers, der nicht verdunstet wird und entsprechend von der Luftbefeuchtungsvorrichtung ab- bzw. zurückgeführt wird, soll erfindungsgemäß minimiert werden.

Diese Aufgabe wird erfindungsgemäß dadurch gelöst, dass jeder Turbulenzflügel bzw. jedes Winglet zumindest zwei Turbulenzkanten aufweist, mittels denen in der die Luftverwirbelungsstufe durchströmenden Luftströmung gleichartige Luftwirbel erzeugbar sind, die zur Hauptströmungsrichtung der Luftströmung und zu einer dazu senkrechten Strömungsquerschnittsrichtung geneigt angeordnet sind und deren Abstand zueinander in der Hauptströmungsrichtung größer wird, so dass die von den beiden Turbulenzkanten ausgebildeten Luftwirbel in ihrer Berührungszone gleich gerichtet sind.

Aufgrund der sich im Falle der erfindungsgemäß ausgestalteten Luftverwirbelungsstufe einstellenden Strömungsverhältnisse innerhalb der die Luftbefeuchtungsvorrichtung durchströmenden Luftströmung lässt sich erreichen, dass im Vergleich zum Stand der Technik an der Ausgangsseite der Luftbefeuchtungsvorrichtung der dort anfallende Überschusswasseranteil um ca. 30 % reduziert wird. Die Beaufschlagung der in die Luftbefeuchtungsvorrichtung eintretenden Luftströmung mit Flüssigkeit findet im Falle der erfindungsgemäß ausgestalteten Luftbefeuchtungsvorrichtung daher mit einem erheblich erhöhten Wirkungsgrad statt.

Gemäß einer vorteilhaften Ausführungsform der erfindungsgemäßen Luftbefeuchtungsvorrichtung hat deren Luftverwirbelungsstufe eine Vielzahl von Turbulenzflügeln bzw. Winglets, die ihrerseits jeweils mehrere, vorzugsweise vier, Flügelteile aufweisen. An jedem Flügelteil sind zwei zur Hauptströmungsrichtung und zur dazu senkrechten Strömungsquerschnittrichtung geneigte Turbulenzkanten ausgebildet, deren Abstand zueinander in der Hauptströmungsrichtung anwächst. Die von den beiden Turbulenzkanten jedes Flügelteils und die von einander gegenüberliegenden Turbulenzkanten benachbarter Flügelteile ausgebildeten Luftwirbel sind dann in ihrer Berührungszone gleich gerichtet.

Darüber hinaus können die Turbulenzflügel bzw. Winglets mit ihren Turbulenzkanten so ausgebildet und angeordnet werden, dass von einander gegenüberliegenden Turbulenzkanten benachbarter Turbulenzflügel bzw. Winglets erzeugte Luftwirbel in ihrer Berührungszone ebenfalls gleich gerichtet sind. Hierbei kann es sich um über- oder untereinander angeordnete Turbulenzflügel bzw. Winglets handeln. In jedem Fall ist sichergestellt, dass in demjenigen Bereich zwischen den Turbulenzflügeln bzw. Winglets, in denen die von diesen erzeugten Luftwirbel miteinander in Berührung geraten, deren Gleichrichtung gewährleistet ist.

Gemäß einer vorteilhaften Weiterbildung der erfindungsgemäßen Luftbefeuchtungsvorrichtung weist jeder Turbulenzflügel bzw. jedes Winglet gleichartige Flügelteile auf, die im Wesentlichen dreieckförmig ausgestaltet sind, in einem Eckbereich in einen Mittelbereich des Turbulenzflügels bzw. Winglets übergehen, mit ihrer diesem Eckbereich gegenüberliegenden Seitenkante in einer Strömungsquerschnittebene der Luftströmung angeordnet sind und mit ihren den Eckbereich mit der in der Strömungsquerschnittebene der Luftströmung angeordneten Seitenkante verbindenden Seitenkanten die Turbulenzkanten ausbilden. Derartige Turbulenzflügel bzw. Winglets lassen sich mit einem vergleichsweise geringen technisch-konstruktiven Aufwand und mit großer Genauigkeit herstellen, was vorteilhafte Einflüsse auf die angestrebte Verwirbelung der Luftströmung hat.

Die dem Eckbereich gegenüberliegende Seitenkante eines Flügelteils eines Turbulenzflügels bzw. Winglets ist vorzugsweise rechtwinklig zur dem Eckbereich gegenüberliegenden Seitenkante eines diesem Flügelteil gegenüberliegenden Flügelteils eines benachbarten Turbulenzflügels bzw. Winglets angeordnet. Hierdurch kann in denjenigen Berührungszonen, in denen die von unterschiedlichen Turbulenzflügeln bzw. Winglets erzeugten Luftwirbel miteinander in Kontakt geraten, eine Gleichrichtung der in Kontakt bzw. in Berührung geratenden Luftwirbel sichergestellt werden.

Alternativ ist es möglich, dass die dem Eckbereich gegenüberliegende Seitenkante eines Flügelteils eines Turbulenzflügels bzw. Winglets parallel zur dem Eckbereich gegenüberliegenden Seitenkante eines diesem Flügelteil gegenüberliegenden Flügelteils eines benachbarten Turbulenzflügels bzw. Winglets angeordnet ist. Auch hierbei wird erreicht, dass die miteinander in Berührung geratenden, von unterschiedlichen Turbulenzflügeln bzw. Winglets erzeugten Luftwirbel in ihren Berührungszonen im Wesentlichen gleich gerichtet sind.

Zur weiteren Erhöhung des Wirkungsgrads der Luftbefeuchtungsvorrichtung sowie zur kompakteren Gestaltung derselben ist es vorteilhaft, wenn jedem Turbulenzflügel bzw. Winglet eine Düse der Düsenstufe zugeordnet ist. Die Ausgestaltung und Beaufschlagung der Düse kann im Zusammenwirken mit einer Ausgestaltung des Turbulenzflügels bzw. Winglets so gewählt werden, dass die Aufnahme der Flüssigkeit in die Luftströmung optimiert werden kann.

Hierzu ist es vorteilhaft, wenn die einem Turbulenzflügel bzw. Winglet zugeordnete Düse in einem Mittelbereich des Turbulenzflügels bzw. Winglets angeordnet wird, wobei in konstruktiv-technischer Weise eine Anbringung der jeweiligen Düse am Mittelbereich des Turbulenzflügels bzw. Winglets realisiert sein kann. Hierdurch wird erreicht, dass die Düsenstufe der Luftbefeuchtungsvorrichtung quasi im Bereich der Luftverwirbelungsstufe ausgebildet wird. Die Eindüsung bzw. Abstrahlung der Flüssigkeit in die Luftströmung erfolgt somit in demjenigen Bereich, in dem auch die Verwirbelung der Luftströmung erzeugt wird und in dem demgemäß die Verhältnisse zur Aufnahme der Flüssigkeit innerhalb der Luftströmung optimal sind.

Es hat sich herausgestellt, dass es vorteilhaft ist, wenn die einem Turbulenzflügel bzw. Winglet zugeordnete Düse die Flüssigkeit in Hauptströmungsrichtung der Luftströmung, vorzugsweise mit einem Abstrahl- bzw. Düsenwinkel von ca. 80 Grad, abstrahlt bzw. eindüst.

Um die Luftverwirbelung in der Luftverwirbelungsstufe, die eine große Anzahl von neben- bzw. untereinander angeordneten Turbulenzflügel bzw. Winglets aufweisen kann, über den gesamten Strömungsquerschnitt, insbesondere in dessen Randbereichen, optimal gestalten zu können, ist es vorteilhaft, wenn der Neigungswinkel zur Hauptströmungsrichtung der Luftströmung jedes Flügelteils der Turbulenzflügel bzw. Winglets vorzugsweise separat einstellbar ist. Beispielsweise in Randbereichen des Strömungsquerschnitts können andere Neigungswinkel zweckmäßig sein als in einem mittleren Bereich des Strömungsquerschnitts.

Zur weiteren Reduzierung der an der Ausgangsseite der erfindungsgemäßen Luftbefeuchtungsvorrichtung anfallenden Überschussflüssigkeit, die ab- bzw. rückgeführt werden müsste, wird gemäß einer weiteren vorteilhaften Ausführungsform vorgeschlagen, die Luftbefeuchtungsvorrichtung ausgangsseitig mit einem Wasserabscheider auszurüsten, der aus einem Paket in Strömungsrichtung gewellter und zueinander beabstandeter Platten ausgebildet ist, die an ihren mit der Luftströmung in Berührung kommenden Oberflächen mit einer Beschichtung aus einem Zeolithwerkstoff versehen sind. Mittels der Beschichtung wird in der den Wasserabscheider durchströmenden Luftströmung noch vorhandenes unverdunstetes Wasser, welches in Form von feinsten Wassertröpfchen, -partikeln und Aerosolen vorliegen kann, gespeichert. Dieses gespeicherte Wasser bzw. diese gespeicherte Flüssigkeit kann dann von solchen Anteilen der den Wasserabscheider durchströmenden Luftströmung, die noch nicht gesättigt sind, aufgenommen werden. Der Anteil des Überschusswassers bzw. der Überschussflüssigkeit lässt sich so weiter reduzieren und quasi vollständig vermeiden.

Im Folgenden wird die Erfindung anhand einer Ausführungsform unter Bezugnahme auf die Zeichnung näher erläutert.

Es zeigen:
- Figur 1: eine Prinzipdarstellung einer Ausführungsform einer erfindungsgemäßen Luftbefeuchtungsvorrichtung;
- Figur 2: eine perspektivische Darstellung eines Turbulenzflügels bzw. Winglets einer Luftverwirbelungsstufe der erfindungsgemäßen Luftbefeuchtungsvorrichtung;
- Figur 3: eine Seitenansicht des in Figur 2 gezeigten Turbulenzflügels bzw. Winglets;
- Figur 4: eine Vorderansicht des in den Figuren 2 und 3 gezeigten Turbulenzflügels bzw. Winglets;
- Figur 5: eine Vorderansicht von der stromabwärtigen Seite her einer Ausführungsform einer Luftverwirbelungsstufe der erfindungsgemäßen Luftbefeuchtungsvorrichtung; und
- Figur 6: eine Figur 5 entsprechende Darstellung einer modifizierten Ausführungsform der Luftverwirbelungsstufe der erfindungsgemäßen Luftbefeuchtungsvorrichtung.

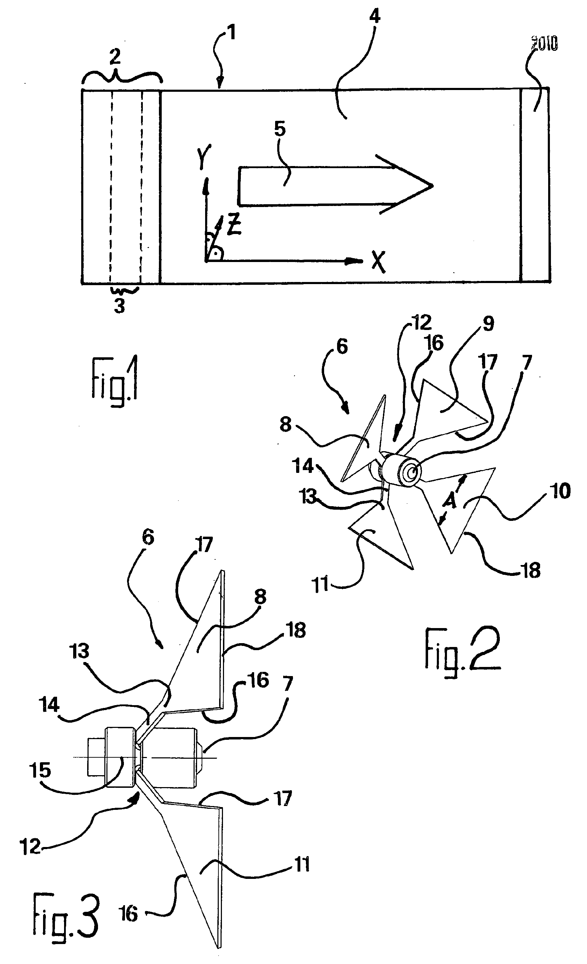

Eine in Figur 1 prinzipiell in Längsansicht gezeigte Ausführungsform einer erfindungsgemäßen Luftbefeuchtungsvorrichtung 1 ist eingangsseitig an eine in den Figuren nicht dargestellte Luftzuleitung und ausgangsseitig an eine in den Figuren ebenfalls nicht dargestellte Feuchtluftableitung angeschlossen.

In ihrem eingangsseitigen Endabschnitt hat die Luftbefeuchtungsvorrichtung 1 eine Luftverwirbelungsstufe 2 und eine quasi innerhalb der Luftverwirbelungsstufe 2 angeordnete Düsenstufe 3. Stromab der Luftverwirbelungsstufe 2 und der Düsenstufe 3 erstreckt sich eine Mischstrecke 4, in der die in der Luftverwirbelungsstufe 2 verwirbelte, vergleichsweise trockene Luftströmung 5 die in der Düsenstufe 3 in sich eingeführte Feuchtig- bzw. Flüssigkeit aufnehmen soll.

Die Luftströmung 5, die die Luftbefeuchtungsvorrichtung 1 durchströmt, hat eine Hauptströmungsrichtung, die in Figur 1 durch den Pfeil X dargestellt ist. Der Strömungsquerschnitt der Luftströmung 5 wird in Figur 1 durch die die Strömungsquerschnittebene der Luftströmung 5 aufspannenden Pfeile Y und Z angezeigt.

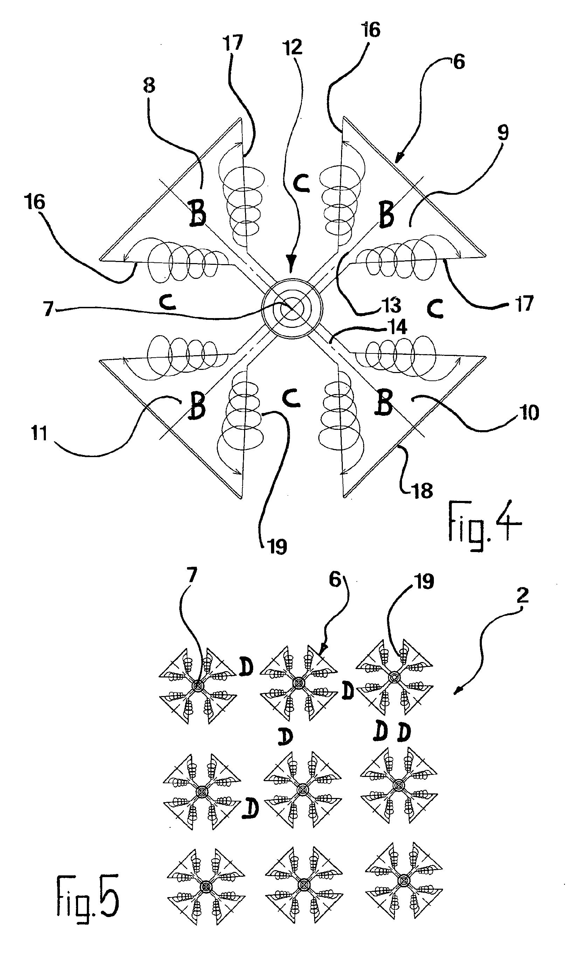

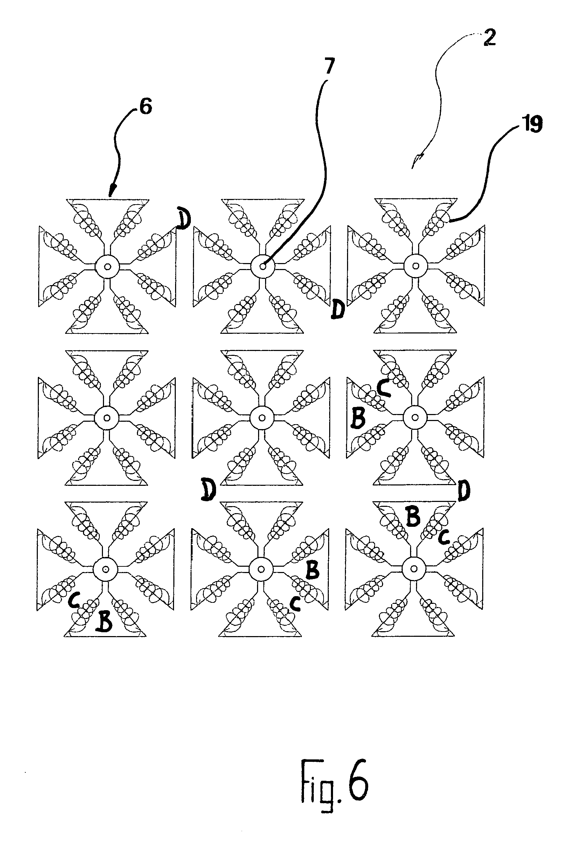

In den dargestellten Ausführungsformen der erfindungsgemäßen Luftbefeuchtungsvorrichtung 1 hat die Luftverwirbelungsstufe 2, wie sich insbesondere aus den Figuren 5 und 6 ergibt, eine Vielzahl von Turbulenzflügeln bzw. Winglets 6, die in drei übereinander angeordneten Reihen jeweils zu dritt nebeneinander angeordnet sind. Jedem Turbulenzflügel bzw. Winglet 6 ist eine Düse 7 der Düsenstufe 3 zugeordnet.

Die Reihen der Turbulenzflügel bzw. Winglets 6 sind in einer Strömungsquerschnittebene Y, Z der die Luftbefeuchtungsvorrichtung 1 durchströmenden Luftströmung 5 parallel und gleich beabstandet zueinander angeordnet. Außerdem haben einander benachbarte Turbulenzflügel bzw. Winglets 6 einer Reihe gleiche Abstände.

Bei den dargestellten Ausführungsbeispielen der Luftbefeuchtungsvorrichtung 1 hat jeder Turbulenzflügel bzw. jedes Winglet 6 vier Flügelteile 8, 9, 10, 11, wie am besten aus den Figuren 2 und 4 hervorgeht. Die Flügelteile 8, 9, 10, 11 sind jeweils in gleicher Weise dreieckförmig ausgestaltet. Sie sind mit gleichem Winkelabstand zueinander um einen Mittelbereich 12 des Turbulenzflügels bzw. Winglets 6 angeordnet. Jedes Flügelteil 8, 9, 10, 11 hat einen diesem Mittelbereich 12 zugeordneten Eckbereich 13, der in einen Steg 14 übergeht, mittels dem das jeweilige Flügelteil 8, 9, 10, 11 an einer Mittelachse 15 des Turbulenzflügels bzw. Winglets 6 angebracht ist.

Von diesem Eckbereich 13 jedes Flügelteils 8, 9, 10, 11 aus erstrecken sich zwei Seitenkanten des im Wesentlichen dreieckfömigen Flügelteils 8, 9, 10, 11, die dessen Turbulenzkanten 16, 17 bilden.

Wie sich aus einer Zusammenschau der Figuren 1 bis 3 ergibt, erstrecken sich die Flügelteile 8, 9, 10, 11 von ihrem jeweiligen Eckbereich 13 aus aufgrund ihrer Schrägstellung in der Hauptströmungsrichtung X der Luftströmung 5, und zwar geneigt sowohl zur Hauptströmungsrichtung X als auch zur Strömungsquerschnittebene Y, Z. Eine dem jeweiligen Eckbereich 13 gegenüberliegende Seitenkante 18 des dreieckförmigen Flügelteils 8, 9, 10, 11 ist, wie sich am besten aus einer Zusammenschau der Figuren 1 und 3 ergibt, in einer Strömungsquerschnittebene Y, Z der Luftströmung 5 angeordnet.

Der Abstand A zwischen den von einem Flügelteil 8, 9, 10, 11 ausgebildeten Turbulenzkanten 16, 17, nimmt, wie sich am besten aus Figur 2 ergibt, in der Hauptströmungsrichtung X gleichmäßig zu. An den Turbulenzkanten 16, 17 jedes Flügelteils 8, 9, 10, 11 jedes Turbulenzflügels bzw. Winglets 6 werden, wie dies in den Figuren 4 bis 6 gezeigt ist, Luftwirbel 19 erzeugt. Die Erzeugung dieser Luftwirbel 19 erfolgt aufgrund der Ausgestaltung und der Anordnung der im dargestellten Ausführungsbeispiel je Turbulenzflügel bzw. Winglet 6 acht Turbulenzkanten in der Weise, dass die von einem Flügelteil 8, 9, 10 bzw. 11 erzeugten beiden Luftwirbel 19 in ihrer Berührungszone B, die etwa mittig auf der in Hauptströmungsrichtung X orientierten Seite des dreieckförmigen Flügelteils 8, 9, 10, 11 orientiert ist, gleich gerichtet sind.

Die von den einander gegenüberliegenden Turbulenzkanten 16, 17 benachbarter Flügelteile 8, 9, 10, 11 erzeugten Luftwirbel 19 werden ebenfalls so gerichtet, dass sie in einer Berührungszone C, die zwischen den einander gegenüberliegenden Turbulenzkanten 16, 17 benachbarter Flügelteile 8, 9, 10, 11 angeordnet ist, gleich gerichtet sind.

Auch für in Vertikalrichtung über- bzw. untereinander angeordnete Turbulenzflügel bzw. Winglets 6 ergibt sich, dass die von ihnen jeweils erzeugten Luftwirbel 19 in den Berührungszonen D, in der die von in Vertikalrichtung benachbarten Turbulenzflügeln bzw. Winglets 6 erzeugten Luftwirbel 19 zusammenlaufen, eine Gleichrichtung der zusammenlaufenden Luftwirbel 19.

Bei der in Figur 5 dargestellten Ausführungsform der Luftverwirbelungsstufe 2 der Luftbefeuchtungsvorrichtung 1 sind die einander gegenüberliegenden Seitenkanten 18 der Flügelteile 8, 9, 10, 11 in Horizontal- oder Vertikalrichtung benachbarter Turbulenzflügel bzw. Winglets 6 etwa rechtwinklig zueinander in einer Strömungsquerschnittebene Y, Z der Luftströmung 5 angeordnet.

Bei der in Figur 6 gezeigten Ausführungsform der Luftverwirbelungsstufe 2 verlaufen die Seitenkanten 18 einander gegenüberliegender bzw. zugeordneter Flügelteile 8, 9, 10, 11 in Horizontal- oder in Vertikalrichtung benachbarter Turbulenzflügel bzw. Winglets 6 parallel zueinander.

Im Falle der in den Figuren 1 bis 6 gezeigten Ausführungsformen der Luftbefeuchtungsvorrichtung 1 wird die in Figur 1 durch die gestrichelten Linien angedeutete Düsenstufe 3 durch die Düsen 7 gebildet, von denen jeweils eine im Mittelbereich 12 bzw. an der Mittelachse 15 jedes Turbulenzflügels bzw. Winglets 6 vorgesehen und angebracht ist. Jede Düse 7 öffnet sich mit einem Abstrahl- bzw. Düsenwinkel, der beispielsweise bei ca. 80 Grad liegt, in Hauptströmungsrichtung X der Luftströmung 5.

Jedes Flügelteil 8, 9, 10, 11 kann, wenn dies bei bestimmten Anforderungsprofilen zweckmäßig ist, hinsichtlich seines Neigungswinkels zur Hauptströmungsrichtung X der Luftströmung 5 separat einstellbar ausgestaltet vorgesehen sein. Des Weiteren ist es selbstverständlich auch möglich, die Düse 7 jedes Turbulenzflügels bzw. Winglets 6 hinsichtlich ihres Abstrahl- bzw. Düsenwinkels und hinsichtlich ihrer Flüssigkeitsbeaufschlagung separat einzustellen, je nach Anordnung des betreffenden Turbulenzflügels bzw. Winglets 6 in der Luftverwirbelungsstufe 2 bzw. in der Düsenstufe 3.

Mittels der vorstehend geschilderten Luftbefeuchtungsvorrichtung 1 lässt sich der Wirkungsgrad, mit dem die Aufnahme von Flüssigkeit in der Luftströmung 5 stattfindet, erheblich erhöhen. Diese Erhöhung kann z.B. in einer Größenordnung von ca. 30 % liegen.

Ausgangsseitig der Luftbefeuchtungsvorrichtung 1 ist bei der in Figur 1 prinzipiell gezeigten Ausführungsform derselben ein Wasserabscheider 20 angeordnet. Dieser besteht aus einem Paket in Strömungsrichtung gewellter und zueinander beabstandeter Platten, die an ihren mit der Luftströmung 5 in Berührung kommenden Oberflächen mit einer Beschichtung aus einem Zeolithwerkstoff versehen sind. Mittels der Zeolithwerkstoff-Beschichtung kann im Ausgangsbereich der Luftverwirbelungsvorrichtung 1 noch in der Luftströmung 5 vorhandenes unverdunstetes Wasser, welches in Form von kleinsten Wassertröpfchen, -partikeln und Aerosolen vorliegen kann, der Luftströmung 5 entzogen und gespeichert werden, wobei dieses gespeicherte Wasser dann an solche Anteile der Luftströmung 5, die noch nicht mit Feuchtigkeit gesättigt sind, abgegeben werden kann. Der Wasserabscheider 20 fungiert quasi als Nachverdunster. Überschüssiges, von der Luftbefeuchtungsvorrichtung 1 ab- bzw. zurückzuführendes Wasser fällt praktisch nicht an.

## Patentansprüche

1. Luftbefeuchtungsvorrichtung mit einer Luftverwirbelungsstufe (2) mit Turbulenzflügeln bzw. Winglets (6), mittels denen eine in die Luftbefeuchtungsvorrichtung (1) eingetretene Luftströmung (5) verwirbelbar ist, einer Düsenstufe (3), mittels der die Luftströmung (5) mit einer Flüssigkeit beaufschlagbar ist, und einer Mischstrecke (4), in die die Luftströmung (5) stromab der Luftverwirbelungsstufe (2) und der Düsenstufe (3) eintritt, **dadurch gekennzeichnet, dass** jeder Turbulenzflügel bzw. jedes Winglet (6) zumindest zwei Turbulenzkanten (16, 17) aufweist, mittels denen in der die Luftverwirbelungsstufe (2) durchströmenden Luftströmung (5) gleichartige Luftwirbel (19) erzeugbar sind, die zur Hauptströmungsrichtung X der Luftströmung (5) und zu einer dazu senkrechten Strömungsquerschnittrichtung Y, Z geneigt angeordnet sind und deren Abstand A zueinander in der Hauptströmungsrichtung X größer wird, so dass die von den beiden Turbulenzkanten (16, 17) ausgebildeten Luftwirbel (19) in ihrer Berührungszone B gleich gerichtet sind.

2. Luftbefeuchtungsvorrichtung nach Anspruch 1, mit Turbulenzflügeln bzw. Winglets (6), die jeweils mehrere, vorzugsweise vier, Flügelteile (8, 9, 10, 11) aufweisen, wobei an jedem Flügelteil (8, 9, 10, 11) zwei zur Hauptströmungsrichtung X und zur dazu senkrechten Strömungsquerschnittrichtung Y, Z geneigte Turbulenzkanten (16, 17) ausgebildet sind, deren Abstand A zueinander in der Hauptströmungsrichtung X größer wird, so dass die von den beiden Turbulenzkanten (16, 17) jedes Flügelteils (8, 9, 10, 11) und die von einander gegenüberliegenden Turbulenzkanten (16, 17) benachbarter Flügelteile (8, 9, 10, 11) ausgebildeten Luftwirbel (19) in ihrer Berührungszone A, B gleich gerichtet sind.

3. Luftbefeuchtungsvorrichtung nach Anspruch 1 oder 2, deren Turbulenzflügel bzw. Winglets (6) mit ihren Turbulenzkanten (16, 17) so ausgebildet und angeordnet sind, dass von einander gegenüberliegenden Turbulenzkanten (16, 17) benachbarter Turbulenzflügel bzw. Winglets (6) erzeugte Luftwirbel (19) in ihrer Berührungszone D gleich gerichtet sind.

4. Luftbefeuchtungsvorrichtung nach einem der Ansprüche 1 bis 3, bei der jeder Turbulenzflügel bzw. jedes Winglet (6) gleichartige Flügelteile (8, 9, 10, 11) aufweist, die im Wesentlichen dreieckförmig ausgestaltet sind, in einem Eckbereich (13) in einen Mittelbereich (12) des Turbulenzflügels bzw. Winglets (6) übergehen, mit ihrer diesem Eckbereich (13) gegenüberliegenden Seitenkante (18) in einer Strömungsquerschnittebene Y, Z der Luftströmung (5) angeordnet sind und mit ihrem den Eckbereich (13) mit der in Strömungsquerschnittebene Y, Z der Luftströmung (5) angeordneten Seitenkante (18) verbindenden Seitenkanten die Turbulenzkanten (16, 17) ausbilden.

5. Luftbefeuchtungsvorrichtung nach Anspruch 4, bei der die dem Eckbereich (13) gegenüberliegende Seitenkante (18) eines Flügelteils (8, 9, 10, 11) eines Turbulenzflügels bzw. Winglets (6) rechtwinklig zur dem Eckbereich (13) gegenüberliegenden Seitenkante (18) eines diesem Flügelteil (8, 9, 10, 11) gegenüberliegenden Flügelteils (8, 9, 10, 11) eines benachbarten Turbulenzflügels bzw. Winglets (6) angeordnet ist.

6. Luftbefeuchtungsvorrichtung nach Anspruch 4, bei der die dem Eckbereich (13) gegenüberliegende Seitenkante (18) eines Flügelteils (8, 9, 10, 11) eines Turbulenzflügels bzw. Winglets (6) parallel zur dem Eckbereich (13) gegenüberliegenden Seitenkante (18) eines diesem Flügelteil (8, 9, 10, 11) gegenüberliegenden Flügelteils (8, 9, 10, 11) eines benachbarten Turbulenzflügels bzw. Winglets (6) angeordnet ist.

7. Luftbefeuchtungsvorrichtung nach einem der Ansprüche 1 bis 6, bei der jedem Turbulenzflügel bzw. Winglet (6) eine Düse (7) der Düsenstufe (3) zugeordnet ist.

8. Luftbefeuchtungsvorrichtung nach Anspruch 7, bei der die einem Turbulenzflügel bzw. einem Winglet (6) zugeordnete Düse (7) in einem Mittelbereich (12) des Turbulenzflügels bzw. Winglets (6) angeordnet ist.

9. Luftbefeuchtungsvorrichtung nach Anspruch 7 oder 8, bei der die einem Turbulenzflügel bzw. Winglet (6) zugeordnete Düse (7) am Mittelbereich (12) des Turbulenzflügels bzw. Winglets (6) angebracht ist.

10. Luftbefeuchtungsvorrichtung nach einem der Ansprüche 7 bis 9, bei der die einem Turbulenzflügel bzw. einem Winglet (6) zugeordnete Düse (7) die Flüssigkeit in Hauptströmungsrichtung X der Luftströmung (5) vorzugsweise mit einem Abstrahl- bzw. Düsenwinkel von ca. 80 Grad abstrahlt.

11. Luftbefeuchtungsvorrichtung nach einem der Ansprüche 2 bis 10, bei der der Neigungswinkel zur Hauptströmungsrichtung X der Luftströmung (5) jedes Flügelteils (8, 9, 10, 11) der Turbulenzflügel bzw. Winglets (6) vorzugsweise separat einstellbar ist.

12. Luftbefeuchtungsvorrichtung nach einem der Ansprüche 1 bis 11, mit einem Wasserabscheider (20), der aus einem Paket in Strömungsrichtung gewellter und zueinander beabstandeter Platten ausgebildet ist, die an ihren mit der Luftströmung (5) in Berührung kommenden Oberflächen mit einer Beschichtung aus Zeolithwerkstoff versehen sind.
